# EUROPEAN PATENT APPLICATION

(11) **EP 2 757 053 A1**
(43) Date of publication of application: **23.07.2014**
(21) Application number: 14250006.5
(22) Date of filing: 15.01.2014
(51) Int. Cl.: B65D 63/02, B65D 63/10

(54) **A releasable connector**

(30) Priority: 16.01.2013 GB 201300764
(71) Applicant: Entwistle, Lorne, Walmersely, Bury BL9 5QU (GB)
(72) Inventor: Entwistle, Lorne, Walmersely, Bury BL9 5QU (GB)
(74) Representative: Bray, Lilian Janet

(57) **Abstract**

A releasable connector (1) is provided, in particular, for connecting rods or bars together, especially rods and bars forming part of temporary fencing panels, or as a pair of handcuffs. The connector (1) comprises at least one strap (2) that projects from a lock (4). The strap (2) is adapted to be wrapped around part of a first item and the connector (1) is provided with a second means whereby it can be secured to a second item so that the first and second items can be connected together. The lock (4) is located in an aperture (5) defined by the connector (1) adjacent a channel (8) into which a free end of the strap (2) may be inserted. The lock (4) comprises a rotatable barrel (7) that defines at least one projection (12; 16) which on rotation of the barrel (7) engages the strap (2) when it is within the channel (8) to secure the strap in position. Preferably, the second means comprises a second strap (3) and the aperture (5) in which the lock (4) is located is between two channels (8) into which free ends of the straps (2, 3) may be respectively inserted, each strap (2, 3) being securable in position by a projection (12; 16) defined by the barrel (7). Alternatively or in addition, the connector (1) is provided with a tab or a lug (18) that is adapted to be connected by a fastener either to the second item or to a third item.

## Description

The present invention relates to a connector for connecting two items together. Such items may, for example, comprise rods, tubes or bars that form part of temporary fencing panels commonly used to fence off building works or road works to prevent entry by the public. In some embodiments, the connector may also be used as a pair of handcuffs or similar form of restraint.

Conventionally, temporary fencing panels for the above purposes comprise a series of rectangular fencing panels with each panel having a leg portion at each end. The lower ends of the leg portions are received in holes provided in base members that are weighted to hold the fence structure in place. Adjacent fencing panels are typically connected together or to upright members of the fence by simple spring clips or cable ties. These connectors have the disadvantage that they can be readily removed by unauthorized persons who can then gain access to a fenced-off area. Also, most cable ties have the disadvantage that a securing strap of the tie is not releasable from its locking mechanism so that the tie cannot be reused after the fencing has been dismantled.

It is an object of the present invention to overcome the aforementioned problems.

According to the present invention there is provided a releasable connector comprising a first means adapted for securement of the connector to a first item and a second means adapted for securement of the connector to a second item, the first means comprising a strap that projects from a lock and that is adapted to be wrapped around a part of the first item, characterised in that the lock is located in an aperture defined by the connector adjacent a channel into which a free end of the strap may be inserted and in that the lock comprises a rotatable barrel that defines at least one projection which on rotation of the barrel engages the strap when it is within the channel to secure the strap in position.

Preferably, the connector is provided with a tab or a lug that is adapted to be connected by a fastener either to the second item or to a third item. Alternatively or in addition, the second means comprises a second strap and the aperture in which the lock is located is between two channels into which free ends of the straps may be respectively inserted, each strap being securable in position within its channel by a projection or at least one of a plurality projections that is defined by the barrel of the lock and that engages a part of said strap.

Preferably also, the or each strap defines a series of transverse ridges or slots that is engaged by the projection to retain the strap within its channel.

Preferably also, the barrel defines a keyhole and a key is provided that fits into the keyhole and enables the barrel to be rotated.

Other preferred but non-essential features of the present invention are described in the dependent claims appended hereto.

Examples of the present invention will now be described with reference to the accompanying drawings, in which:-
Fig. 1 is a perspective view of a first embodiment of a connector in accordance with the present invention;
Fig. 2 is a partially exploded view of the connector shown in Fig. 1 showing a barrel thereof in more detail;
Fig. 3 is a perspective view of another embodiment of barrel for use in a second embodiment of connector in accordance with the present invention.

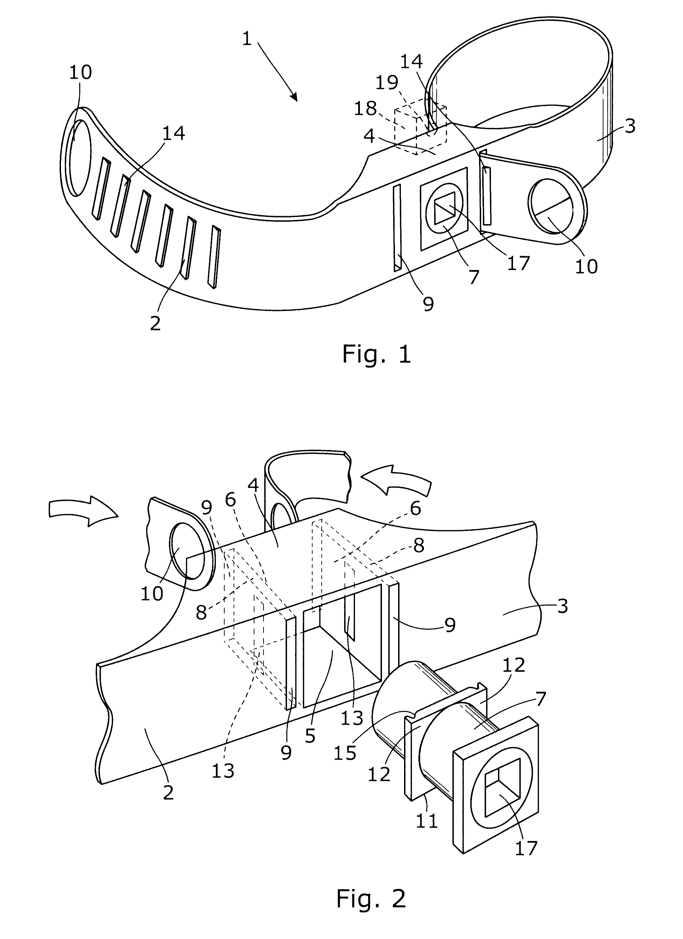

A first embodiment of a releasable connector 1 is shown in Figs. 1 and 2. The connector 1 comprises a pair of straps 2 and 3 that project from a lock 4. The straps 2, 3 are flexible and are adapted to be wrapped respectively around parts of two items to be connected, the free ends of the straps 2, 3 being securable to the lock 4 to form the connection. To this end the straps 2, 3 project outwards from the lock 4 on opposite sides thereof so that they are in line with one another. However, in other embodiments of connector, the straps 2, 3 may be angled with respect to one another, for example they may be angled at 90° to one another. The connector 1 including the straps 2, 3 may be manufactured from any suitable material and, in particular from metal or plastics or a combination of the two as desired. Preferably, the straps 2, 3 are made from a resilient material such as plastics even if the lock part of the connector is made predominantly from metal. Advantageously, the straps 2, 3 are made of a tough material that is not readily severable by manual use of a knife or similar manual tool.

The connector 1 defines a central aperture 5 between opposing side walls 6 into which aperture 5 is located a rotatable barrel 7 forming part of the lock 4. The side walls 6 each form one wall respectively of two channels 8 that are located on opposite sides of the aperture 5. The channels 8 are accessible via openings 9 at both of their ends and are of a size commensurate with the cross-sectional profile of the straps 2, 3 in order that the free ends of the straps 2, 3 may each inserted into and through one of the channels 8 that is adjacent to it. To facilitate pulling of the straps 2, 3 through its respective channel 8, the free ends of the straps 2, 3 are preferably provided with finger-pull holes 10.

In the first embodiment as shown in Fig. 2, the barrel 7 carries a plate 11 part-way along its length that defines two projections or wings 12 that project outwards from opposite sides of the barrel 7. In a first position of the barrel 7 the projections 12 are located solely within the aperture 5 but as the barrel 7 is rotated into a second position, for example at 90° to the first position, the projections 12 are each inserted into one of two slots 13 formed respectively in the walls 6. This forces the projections 12 into contact with the straps 2, 3 and forces the straps 2, 3 to bend. This makes it difficult to push or pull the straps 2, 3 manually through the channels 8 and thereby secures each of the straps 2, 3 in position within its respective channel 8.

It will be appreciated that in some embodiments, the straps 2, 3 may be angled to one another and if they are angled at 90° that the walls 6 and their respective slots 6 may also be angled at 90° and form adjacent as opposed to opposite walls of the aperture 5. In this case the projections 12 on the barrel 7 are also angled at 90°.

In a modification, the straps 2, 3 may each be provided along their length with a series of transverse ridges 14 or transverse slots 14 and the projections 12 may made shorter but be provided with a tooth or notch 15. When the projections 12 are inserted into the of slots 13 by rotation of the barrel 7, instead of bending the straps 2, 3, the tooth or notch 15 on each projection 12 is located either between adjacent ridges 14 or in one of the slots of the adjacent strap 2, 3 thereby locking it in position and preventing it from being pushed or pulled manually through its channel 8. This arrangement is particularly suitable for use when the straps 2, 3 are made of metal as kinks formed in metal straps 2, 3 by the projections 12 make it difficult to reuse the connector 1.

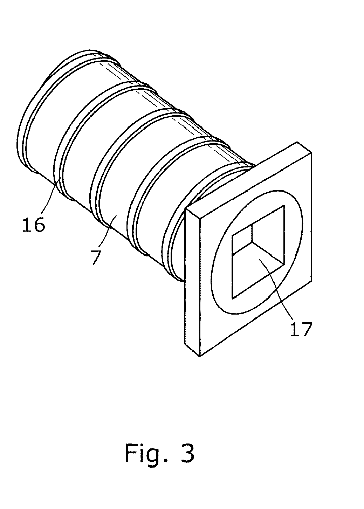

In a second embodiment, as shown in Fig. 3, the barrel 7 defines a projection in the form of a helical thread 16 so that it becomes similar to a worm gear such as is often used on hose connectors. Opposite parts of the thread 16 project through the slots 13 in each wall 6 and in this case the slots 13 are wider so that the thread 16 can engage several side-by-side ridges or slots 14 on each strap 2, 3. The straps 2, 3 are wound through the channels 8 by the rotating the barrel 7 and thereby the thread 16.

In both embodiments, the barrel 7 defines a means at one end that is accessible from the exterior of the lock 4 and that enables it to be rotated within the aperture 5. In the illustrated embodiments, the means comprises a keyhole 17 into which an appropriately shaped key (not shown) may be fitted. In alternative arrangements, the means may comprise a thumb-turn or may comprise a slot or slots suitable for use with a screwdriver.

It will be appreciated that in use, the releasable connector 1 is used to connect two items together by means of the straps 2, 3, which are wrapped around an appropriate parts of the items respectively. The free ends of the straps 2, 3 are then inserted into their respective channels 8. In the first embodiment described above the barrel 7 should be located in its first position so that the free ends of the straps 2, 3 can be pushed through the channels 8 and pulled tight around the parts of the items using the finger-pull holes 10. The barrel 7 can then be rotated into its second position to secure the straps 2, 3 in position thereby connecting the items together. However, in the second embodiment, the straps 2, 3 should each be pushed into its respective channel 8 until its free end is engaged by the helical thread 16. Rotation of the barrel 7 in the appropriate direction will then cause the straps 2, 3 to be pulled into the channels 8 to tighten them around the items being secured. In both embodiments, when it is desired to unfasten the connector 1 the barrel 7 should be rotated in the appropriate direction either to withdraw the projections 12 from the slots 13 to free the straps 2, 3 or to screw the straps 2, 3 out of engagement with the thread 16 so that in both cases the straps 2, 3 can be pulled out of the channels 8.

In a modification, the lock 4 may be provided with a projecting tab or lug 18, that, for example, projects upwards from the lock 4, as shown in dashed lines in Fig. 1, and that provides a means whereby the connector 1 may be fastened to a post, upright part of a temporary fencing arrangement or other item. To this end the tab or lug 18 may be pierced as at 19 to allow it to be secured to the post, upright or other item by a fastener such as a bolt, screw or nail without damage. The connector 1 may then be used to connect an item or items to the post, upright or initial item to which it is secured. It will be appreciated that in connectors with this modification it is sufficient in some cases to provide only a single strap 2 or 3.

Hence, it will be appreciated that as the strap or straps 2, 3 can be released from the lock 4, the invention provides a reusable, releasable connector suitable for connecting items such as the bars of two temporary fencing panels together. The connector can also be adapted so that it can be locked in position to obstruct its unauthorized removal. In some embodiments, the connector 1 is suitable for use as a pair of handcuffs or a similar form of restraint.

## Claims

1. A releasable connector (1) comprising a first means (2) adapted for securement of the connector (1) to a first item and a second means (3: 18) adapted for securement of the connector (1) to a second item, the first means comprising a strap (2) that projects from a lock (4) and that is adapted to be wrapped around a part of the first item, **characterised in that** the lock (4) is located in an aperture (5) defined by the connector (1) adjacent a channel (8) into which a free end of the strap (2) may be inserted and **in that** the lock (4) comprises a rotatable barrel (7) that defines at least one projection (12; 16) which on rotation of the barrel (7) engages the strap (2) when it is within the channel (8) to secure the strap (2) in position.

2. A connector as claimed in Claim 1, **characterised in that** it comprises a tab or a lug (18) that is adapted to be connected by a fastener either to the second item or to a third item.

3. A connector as claimed in Claim 1 or Claim 2, **characterised in that** the second means comprises a second strap (3) and the aperture (5) in which the lock (4) is located is between two channels (8) into which free ends of the straps (2, 3) may be respectively inserted, each strap (2, 3) being securable in position by the projection (12; 16) or at least one of a plurality projections (12; 16) that is defined by the barrel (7) and that engages a part of said strap (2, 3).

4. A connector as claimed in any of Claims 1 to 3, **characterised in that** engagement of the or each strap (2, 3) by the projection (12; 16) bends the strap (2, 3) thereby locking the strap (2, 3) in position within its channel (8).

5. A connector as claimed in any of Claims 1 to 3, **characterised in that** the or each strap (2, 3) defines a series (14) of transverse ridges or slots that is engaged by the respective projection (12) to retain the strap (2, 3) within its channel (8).

6. A connector as claimed in Claim 5 when dependent on Claim 3, **characterised in that** the rotatable barrel (7) defines two projections (12) which in a first position of the barrel (7) respectively engage the two straps (2, 3) within their respective channels and which in a second position of the barrel (7) are retracted to free the straps (2, 3).

7. A connector as claimed in Claim 5 or Claim 6, **characterised in that** the or each projection (12) is provided with a tooth or notch (15) that is adapted to engage either between adjacent ridges or in a slot of the series (14) to secure the strap (2, 3) in position within its channel (8).

8. A connector as claimed in any of Claims 1 to 3, **characterised in that** the or each strap (2, 3) defines a series (14) of transverse ridges or slots that is engaged by the respective projection (12) to retain the strap (2, 3) within the channel (8) and wherein the rotatable barrel (7) defines a projection in the form of a helical thread (16), parts of which thread (16)engage the ridges or slots defined by the strap (2, 3) whereby rotation of the barrel (7) within the aperture (4) causes the strap (2, 3) to be screwed into or out of its channel (8).

9. A connector as claimed in any of Claims 1 to 8, **characterised in that** the barrel (7) defines a keyhole (17) and a key is provided that fits into the keyhole (17) and enables the barrel (7) to be rotated.

10. A connector as claimed in any of Claims 1 to 9, **characterised in that** wherein a finger-pull (10) is provided at the free end of the or each strap (2, 3).
